# EUROPEAN PATENT APPLICATION

(11) **EP 1 002 773 A1**
(43) Date of publication of application: **24.05.2000**
(21) Application number: 99123110.1
(22) Date of filing: 18.11.1999
(51) Int. Cl.: C03C 17/34, C03C 3/087, C03C 4/02

(54) **Heat-reflecting glass and double-glazing unit using the same**

(30) Priority: 18.11.1998 JP 32822998
(71) Applicant: Nippon Sheet Glass Co., Ltd., Osaka-shi, Osaka (JP)
(72) Inventor: Fujisawa, Akira, c/o Nippon Sheet Glass Co., Ltd., Osaka-shi, Osaka (JP); Ataka, Koichi, c/o Nippon Sheet Glass Co., Ltd., Osaka-shi, Osaka (JP); Norimatsu, Hodaka, Nippon Sheet Glass Co., Ltd., Osaka-shi, Osaka (JP); Sakaguchi, Koichi, Nippon Sheet Glass Co., Ltd., Osaka-shi, Osaka (JP)
(74) Representative: HOFFMANN - EITLE

(57) **Abstract**

A heat-reflecting glass is disclosed which has a low visible light reflectance so as not to arouse troubles such as a reflected-light nuisance to the neighborhood, and has high heat radiation shielding properties and a greenish or bluish color tone, a recent taste of the market, and which can be produced at low cost and is especially suitable for use in relatively low-latitude temperate regions. Also disclosed is a heat-reflecting double-glazing unit using the glass. The heat-reflecting glass comprises a glass plate comprising a glass composition which consists essentially of, in % by weight, basic glass compositions comprising 65 to 80% SiO₂, 0 to 5% Al₂O₃, 0 to 5% B₂O₃, 0 to 10% MgO, 5 to 15% CaO, 10 to 18% Na₂O, 0 to 5% K₂O, 5 to 15% MgO+CaO and 10 to 20% Na₂O+K₂O, and coloring components comprising 0.30 to 1.30% total iron oxide in terms of Fe₂O₃, 0 to 1.0% TiO₂, and 0 to 20 ppm CoO and in which the ratio of (the amount of FeO in terms of Fe₂O₃) to (the amount of total iron oxide in terms of Fe₂O₃) is from 0.2 to 0.58, a titanium nitride film formed on one of the two main surfaces of the glass plate, and a metal oxide film formed on the titanium nitride film, said heat-reflecting glass having a visible light reflectance of from 4 to 25% when viewed from the uncoated side of the glass plate and giving a greenish or bluish reflected color tone when viewed from the uncoated side of the glass plate.

## Description

### FIELD OF THE INVENTION

The present invention relates to a heat-reflecting glass which gives a greenish or bluish reflected color tone, has a low visible light reflectance, and is especially suitable for use in windows of buildings, and a double-glazing unit using the glass.

The term "greenish" used herein means to include "green" and "bluish green", and the term "bluish" used herein means to include "blue" and "greenish blue".

### BACKGROUND OF THE INVENTION

Heat-reflecting glasses comprising a glass plate having a heat-reflecting film formed on a surface thereof and tinted glasses (USA) comprising a glass plate containing a slight amount of an additive ingredient have come to be extensively used in buildings, motor vehicles and other vehicles, etc., for the purposes of reducing the load of air cooling or enabling persons irradiated with sunlight to feel less hot. Double-glazing units comprising two or more glass plates separated by an air layer and thus having enhanced heat insulating performance also have been used in windows of buildings. Furthermore, double-glazing units containing a glass plate having a coating film formed on a surface thereof for enhancing heat insulating performance are also known.

Such heat-reflecting glasses comprise an ordinary glass plate and, formed on a surface thereof by sputtering, chemical vapor deposition (CVD), etc., a coating film such as a fluorine-doped tin oxide film, a multilayered film of chromium metal, or a multilayered film of titanium oxide or nitride. In these heat-reflecting glasses, the light interference effect of the coating film is utilized to heighten the reflectance on the surface. Namely, the heat-reflecting glasses serve to thus reflect solar energy and inhibit the inflow of solar radiation energy into buildings, motor vehicles, or other vehicles.

Recently, glasses are in use which have a titanium nitride film formed by sputtering for obtaining reflected light of a greenish or bluish color tone, which is a taste of the market. For example, JP-A-2-44046 (the term "JP-A" as used herein means an "unexamined published Japanese patent application") discloses a glass which comprises a glass plate, a titanium nitride film formed thereon, and a titanium oxide film further formed thereon by sputtering and gives a bluish or greenish reflected color tone.

JP-A-6-305774 discloses a heat-reflecting glass which comprises a glass plate and, formed thereon in this order, a titanium nitride film, a titanium oxide film, and a titanium nitride film and gives a greenish reflected color tone. JP-B-5-39898 (the term "JP-B" as used herein means an "examined Japanese patent publication") discloses a process in which a titanium nitride film is formed on a glass by chemical vapor deposition (CVD) as a technique other than sputtering. Furthermore, JP-A-7-187719 discloses a sunlight protective window glass obtained by forming a titanium nitride film and a titanium oxide film in this order on a glass plate by CVD.

However, the glass disclosed in JP-A-2-44046 has too high a reflectance, although values of reflectance are given therein in terms of reflection L* value. This glass, having a high visible light reflectance, has a problem that it gives glittering reflections of sunlight, which constitute a nuisance to neighborhood buildings and houses.

Furthermore, in order for these heat-reflecting glasses to have enhanced solar heat shielding performance while retaining a low reflectance so as to be suitable for use as a single plate, the glasses need to have an exceedingly low transmittance. As a result, the room becomes too dark and its comfortableness is impaired. Moreover, the technique disclosed in the above reference is disadvantageous in production cost as compared with other techniques because the proposed technique employs a vacuum film deposition technique called sputtering in forming the coating film.

The heat-reflecting glass disclosed in JP-A-6-305774 is obtained by forming a three-layer film by sputtering. However, this production technique also is costly as compared with other techniques.

The film-forming technique disclosed in JP-B-5-39898 employs CVD, which is more suitable for mass production than sputtering. However, there is no description therein concerning optical properties of the glass obtained.

Furthermore, the sunlight protective window glass disclosed in JP-A-7-187719, which is obtained with CVD, has a solar heat shielding performance of from 1 to 1.4, excluding 1, in terms of the ratio of light transmittance TL to energy transmittance TE, according to a description given therein. However, such a value of solar heat shielding performance is insufficient.

### SUMMARY OF THE INVENTION

The present invention has been achieved in view of the problems described above.

One object of the present invention is to provide, at low cost, a heat-reflecting glass which has a low visible light reflectance so as not to arouse troubles such as a reflected-light nuisance to the neighborhood, and has high heat radiation shielding properties and a greenish or bluish color tone, a recent taste of the market, and which is especially suitable for use in relatively low-latitude temperate regions.

Another object of the present invention is to provide a heat-reflecting double-glazing unit.

The present invention, which has been achieved in order to eliminate the above-described problems, provides a heat-reflecting glass which comprises a glass plate comprising a glass composition which consists essentially of, in % by weight:
a basic glass composition comprising
   65 to 80% SiO₂,
   0 to 5% Al₂O₃,
   0 to 5% B₂O₃,
   0 to 10% MgO,
   5 to 15% CaO,
   10 to 18% Na₂O,
   0 to 5% K₂O,
   5 to 15% MgO+CaO, and
   10 to 20% Na₂O+K₂O and
coloring components comprising
   0.30 to 1.30% total iron oxide in terms of Fe₂O₃,
   0 to 1.0% TiO₂, and
   0 to 20 ppm CoO
wherein a ratio of (the amount of FeO in terms of Fe₂O₃) to (the amount of total iron oxide in terms of Fe₂O₃) is from 0.2 to 0.58, a titanium nitride film formed on one of two main surfaces of the glass plate, and a metal oxide film formed on the titanium nitride film,
wherein said heat-reflecting glass has a visible light reflectance of from 4 to 25% when viewed from the uncoated side of the glass plate and gives a greenish or bluish reflected color tone when viewed from the uncoated side of the glass plate.

Preferred embodiments of the above heat-reflecting glass are as follows.

The heat-reflecting glass wherein the metal oxide film is an oxide film mainly comprising any one of silicon oxide, titanium oxide and tin oxide.

The heat-reflecting glass which has a solar heat gain coefficient of from 0.01 to 0.45 when disposed such that the uncoated side of the glass plate faces outward.

The heat-reflecting glass which has a visible light reflectance of from 4 to 20% when viewed from the uncoated side of the glass plate.

The heat-reflecting glass which has a solar heat gain coefficient of from 0.01 to 0.4 when disposed such that the uncoated side of the glass plate faces outward, and which gives a greenish reflected color tone when viewed from the uncoated side of the glass plate.

The heat-reflecting glass which has a visible light reflectance of from 4 to 15% when viewed from the uncoated side of the glass plate and gives a bluish reflected color tone when viewed from said side.

The heat-reflecting glass which has a solar heat gain coefficient of from 0.01 to 0.35 when disposed such that the uncoated side of the glass plate faces outward, and which gives a greenish reflected color tone when viewed from said side.

The heat-reflecting glass wherein the glass plate is a plate glass produced by a float process, and the titanium nitride film and the metal oxide film have been formed on the glass plate surface by a pyrolytic process utilizing the heat resulting from the float process.

The present invention further provides a double-glazing unit which comprises two glass plates disposed so as to face each other and separated by an air layer, inert-gas layer, or vacuum layer formed by sealing the edges of the glass plates, at least one of the glass plates comprising the heat-reflecting glass.

A preferred embodiment of the double-glazing unit is the double-glazing unit wherein the outdoor-side glass plate is the heat-reflecting glass, with the titanium nitride film and metal oxide film formed on a surface of the heat-reflecting glass facing the air, inert-gas layer or vacuum layer of the double-glazing unit, and the double-glazing unit has a solar heat gain coefficient of from 0.01 to 0.35 with respect to solar radiation incident thereon from the outdoor side.

The present invention produces the following effects. A heat-reflecting glass having enhanced solar heat shielding performance is obtained by regulating a glass plate with respect to the amount and valence of iron to thereby attain a reduced solar energy transmittance while maintaining a high visible light transmittance, and by forming a coating film which further reduces the solar energy transmittance.

Furthermore, a heat-reflecting glass giving a greenish or bluish reflected color tone is obtained by regulating the glass plate with respect to the amount and valence of iron to thereby regulate the color of the transmitted light which has passed through the glass plate, and by regulating a metal oxide coating film with respect to its metallic material and further regulating a titanium nitride coating film and the metal oxide coating film with respect to film thickness.

Moreover, a heat-reflecting glass having a low reflectance with respect to light incident thereon from the outdoor side is obtained by using a coated glass plate in which both the glass plate and the coating films show some degree of absorption in the visible region and by forming the coating films on the indoor side.

In addition, a double-glazing unit having higher solar heat shielding performance is obtained by using the above heat-reflecting glass as at least one of the glass plates.

### BRIEF DESCRIPTION OF THE DRAWINGS

Fig. 1 is an enlarged sectional view of a heat-reflecting glass according to the present invention.

Fig. 2 is a view illustrating an on-line CVD apparatus as an example of apparatuses usable for forming a coating film on a glass plate surface in producing a heat-reflecting glass according to the present invention.

Fig. 3 is a view illustrating one embodiment of the double-glazing unit containing a heat-reflecting glass according to the present invention.

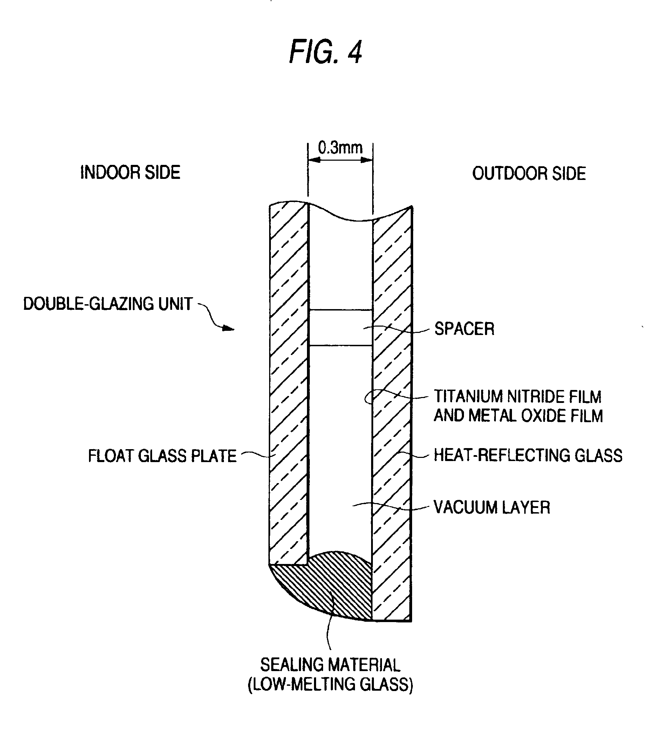

Fig. 4 is a view illustrating another embodiment of the double-glazing unit containing a heat-reflecting glass according to the present invention.

### [Description of Symbols]

1 Glass plate
2 Titanium nitride film
3 Metal oxide film
4 Melting furnace
5 Tin bath
6 Roller
7a, 7b Coater
8 Tweel

### DETAILED DESCRIPTION OF THE INVENTION

The glass substrate for use in the present invention is made of a glass which comprises basic glass compositions for a soda-lime silicate glass and coloring components comprising from 0.30 to 1.30 wt% total iron oxide in terms of Fe₂O₃, wherein the amount of FeO in terms of Fe₂O₃ is from 20 to 58 wt% of the amount of total iron oxide in terms of Fe₂O₃, from 0 to 1.0 wt% TiO₂, and from 0 to 20 ppm CoO. Where the glass substrate is intended to have a greenish tone, it preferably contains, as coloring components, from 0.40 to 1.30 wt% total iron oxide in terms of Fe₂O₃, wherein the amount of FeO in terms of Fe₂O₃ is from 20 to 35 wt% of the total iron oxide amount in terms of Fe₂O₃, from 0 to 1.0wt% TiO₂, and from 0 to 20 ppm CoO. Where the glass substrate is intended to have a bluish tone, it preferably contains, as coloring components, from 0.30 to 1.30 wt% total iron oxide in terms of Fe₂O₃, wherein the amount of FeO in terms of Fe₂O₃ is from 20 to 58 wt% of the total iron oxide amount, and from 0 to 20 ppm CoO. Although high solar heat shielding performance is obtained by using a glass having such a composition, higher solar heat shielding performance is obtained by applying the glass to a double-glazing unit structure.

The reasons for limitations of the composition of the glass substrate for use in the present invention are explained below. Hereinafter, all percents used for indicating component amounts are by weight.

SiO₂ is the main component forming a glass skeleton. If the content of SiO₂ is lower than 65%, the glass has reduced durability. If the content thereof exceeds 80%, the glass is difficult to melt. Consequently, the content of SiO₂ should be from 65 to 80%.

Al₂O₃, which is not an essential ingredient, serves to improve the durability of the glass. If the content of Al₂O₃ exceeds 5%, the glass is difficult to melt. Consequently, the content of Al₂O₃ should be 5% or lower, and is preferably from 0.1 to 2%.

B₂O₃, which is not an essential ingredient, is used for improving the durability of the glass and also as a melting aid. If the content thereof exceeds 5%, troubles arise in glass forming due to vaporization of B₂O₃, etc. Consequently, the content of B₂O₃ should be 5% or lower.

MgO and CaO are used for improving the durability of the glass and for regulating the devitrification temperature and viscosity of the glass during molding. If the content of MgO, which is not an essential ingredient, exceeds 10%, the glass has an elevated devitrification temperature. Consequently, the content of MgO should be 10% or lower. If the content of CaO is lower than 5% or exceeds 15%, the glass has an elevated devitrification temperature. Consequently the content of CaO should be from 5 to 15%. Furthermore, if the total content of MgO and CaO is lower than 5%, the glass has reduced durability. If the total content thereof exceeds 15%, the glass has an elevated devitrification temperature. Consequently, the total content of MgO and CaO should be from 5 to 15%.

Na₂O and K₂O are used as glass melting accelerators. If the content of Na₂O is lower than 10% or if the total content of Na₂O and K₂O is lower than 10%, the effect of melting acceleration is poor. If the content of Na₂O exceeds 18% or if the total content of Na₂O and K₂O exceeds 20%, the glass has reduced durability. The proportion of K₂O, which is not an essential ingredient, should be 5% or lower because it necessitates a higher material cost than Na₂O.

In the glass, iron oxide is present in the forms of Fe₂O₃ and FeO. If the total iron oxide content in terms of Fe₂O₃ is below 0.30%, the effect of absorbing ultraviolet and infrared rays is low and a high visible light transmittance results. On the other hand, total contents thereof exceeding 1.30% are undesirable in that during melting, an upper part of the molten glass heats up excessively due to the heat absorbing effect of FeO, leading to a fear that the resulting radiant heat may raise the temperature of the ceiling bricks of the melting furnace to a temperature above the heat-resistant temperature thereof and the ceiling bricks may thus begin to melt. Consequently, the total iron oxide content in terms of Fe₂O₃ should be from 0.30 to 1.30%. Within this range, there are preferred ranges of the total iron oxide content in terms of Fe₂O₃ for respective glass plate colors. Specifically, the total content thereof for a greenish tone is preferably from 0.40 to 1.30%, while that for a bluish tone is preferably from 0.30 to 1.30%.

In order to obtain a glass plate showing desired total solar energy absorption and visible light absorption and having either of the desired tints, the ratio of (the amount of FeO in terms of Fe₂O₃) to (the amount of total iron oxide in terms of Fe₂O₃) is regulated while keeping the total iron oxide content within the above range. Values of that ratio exceeding 0.58 are undesirable in that the absolute amount of FeO is too large and the temperature of ceiling bricks of the glass melting furnace increases excessively. On the other hand, values of that ratio smaller than 0.2 are undesirable in that the glass has a reduced infrared absorbing effect.

From these standpoints, the ratio of (the amount of FeO in terms of Fe₂O₃) to (the amount of total iron oxide in terms of Fe₂O₃) should be from 0.2 to 0.58. Preferably, that ratio is regulated to a value of from 0.2 to 0.35 for obtaining a greenish tone and to a value of from 0.2 to 0.58 for obtaining a bluish tone.

TiO₂ in the glass is an ingredient which absorbs ultraviolet rays, although not essential. It further absorbs visible light and thus functions to reduce visible light reflectance. It is therefore preferred to add TiO₂ as a coloring ingredient especially for greenish glasses. However, if the concentration of TiO₂ exceeds 1.0%, the glass excessively absorbs visible rays having shorter wavelengths and hence has not the desired color tone but a yellowish tone. Consequently, the content of TiO₂ in the glass composition for use in the present invention should be 1.0% or lower.

CoO, which is not an essential ingredient, contributes to obtaining a greenish color tone when coexistent with TiO₂ and further serves to reduce visible light transmittance. As described above, the color of the glass changes from green to yellowish green or yellow as the addition amount of TiO₂ increases. This color change of the glass toward yellow by the addition of TiO₂ can be inhibited by adding CoO. However, CoO concentrations exceeding 20 ppm are undesirable in that the glass has too low a transmittance. Consequently, the concentration of CoO should be 20 ppm or lower.

The glass having a composition within the range according to the present invention may contain NiO and Cr₂O₃ for the purpose of color tone regulation and may further contain CeO₂ as an ultraviolet absorbing ingredient.

NiO is an ingredient for obtaining a grayish color tone. However, too high NiO concentrations result in a reduced visible light transmittance. Consequently, the content of NiO is preferably up to 0.005%.

Cr203 is an ingredient for obtaining a greenish color tone. However, from the standpoint of glass meltability, the content of Cr₂O₃ is preferably up to 0.5%, more preferably up to 0.05%.

CeO₂ is an ultraviolet absorbing ingredient. However, CeO₂ concentrations exceeding 1.0% are undesirable in that the glass excessively absorbs visible rays having shorter wavelengths and hence has not the desired color tone but a yellowish tone, and that such high CeO₂ concentrations increase the cost of glass production. Consequently, the content of CeO₂ is preferably up to 1.0%.

Furthermore, the glass having a composition within the range according to the present invention may contain at least one of ZnO, MnO, V₂O₅, and MoO₃ in a total amount of up to 1% and sulfur in an amount of up to 1% in terms of SO₃, as long as these ingredients are not counter to the spirit of the invention.

ZnO has the effect of preventing the generation of nickel sulfide, which is apt to generate during glass melting in a reducing atmosphere and is causative of spontaneous breakage.

MnO, V₂O₅, and MoO₃ in the glass each serves as an ultraviolet absorbing ingredient. They can be used also for the fine control of a bronze to achromatic tone according to their degree of ultraviolet absorption.

SO₃ is an ingredient which comes into the glass mainly from a sulfuric acid salt or the like used as a refining agent. When added in a proper amount, SO₃ accelerates the melting and refining of the glass.

One surface of a glass plate having the composition described above is coated with the coating films described below, whereby a heat-reflecting glass having a low visible light reflectance can be obtained.

First, a film mainly comprising titanium nitride, showing intense absorption in a visible to near infrared region, is formed. Thereon is subsequently formed a metal oxide film for preventing oxidation of the titanium nitride and for regulating the color of reflected light. This metal oxide film is made of a material such as silicon oxide, silicon oxide containing carbon and nitrogen, aluminum oxide, an oxide of metals mainly comprising silicon and aluminum, tin oxide, titanium oxide, zinc oxide or indium oxide. Thus, the heat-reflecting glass can be obtained.

Preferred among such materials usable for constituting the metal oxide film are silicon oxide, silicon oxide containing carbon and nitrogen, tin oxide and titanium oxide, from the standpoints of durability, including chemical resistance and abrasion resistance, transparency and ease of film deposition by CVD, which will be described later.

Due to the formation of the coating films, the heat-reflecting glass of the present invention can have a reduced visible light reflectance with respect to light incident thereon from the uncoated side of the glass plate. It is however impossible to completely eliminate the reflection of visible light on the uncoated surface of the glass plate. Since this visible light reflection is about 4% at the most, the lower limit of the visible light reflectance with respect to light incident from the uncoated side is 4%. If the visible light reflectance exceeds 25%, the reflected light glitters to constitute a nuisance to the neighborhood. Consequently, the visible light reflectance of the uncoated surface of the glass plate should be from 4 to 25%, preferably from 4 to 20%.

The heat-reflecting glass is intended to inhibit the inflow of solar radiation energy into buildings and houses, especially buildings, generally for the purpose of energy saving, e.g., reducing the load of air cooling. Hence, from the standpoint of solar heat shielding performance, the solar heat gain coefficient of the glass is preferably as low as possible. Although a reduced solar heat gain coefficient is obtained by reducing the visible light transmittance of the glass, the solar heat gain coefficient cannot be reduced to zero because the spectral range of visible light overlaps that of solar energy. Moreover, if the solar heat gain coefficient is reduced to below 0.01, this, of course, results in too low a visible light transmittance. As a result, illumination with sunlight alone is considerably insufficient for keeping the room sufficiently bright, and comfortableness is impaired. Namely, indoor illuminators need to be always on, which is undesirable from the standpoint of energy saving. If the solar heat gain coefficient exceeds 0.45, air cooling or the like becomes necessary, which also is undesirable from the standpoint of energy saving. Consequently, the solar heat gain coefficient is preferably from 0.01 to 0.45.

Where the heat-reflecting glass is one giving a greenish reflected color tone, the glass plate itself has a solar heat gain coefficient of preferably from 0.01 to 0.4, more preferably from 0.01 to 0.35. This heat-reflecting glass therefore has high solar heat shielding performance. Where the heat-reflecting glass is one giving a bluish reflected color tone, the glass plate itself has a reflectance of from 4 to 15%. This heat-reflecting glass therefore is more inhibited from giving reflections constituting a nuisance to the neighborhood. When the heat-reflecting glass described above is used to fabricate a double-glazing unit, high solar heat shielding performance with a solar heat gain coefficient of from 0.01 to 0.35 is realized.

The reasons why the heat-reflecting glass of the present invention, which utilizes titanium nitride, has a lower reflectance than prior art heat-reflecting glasses have not been elucidated. However, the following can be presumed. When titanium nitride is deposited with titanium tetrachloride by CVD, which is a suitable method for this film deposition as will be described later, the resulting titanium nitride film has a reduced refractive index partly because chlorine is incorporated into the film in a large amount during the film deposition. This low refractive index of the deposited film is thought to bring about the low reflection.

In the present invention, the heat-reflecting glass can be made to give a greenish or bluish reflected color tone by regulating the thickness of the titanium nitride film formed on one surface of the glass plate, the kind of the metal oxide constituting the metal oxide film formed thereon and the thickness of the metal oxide film.

The thickness of each coating film in the present invention is determined according to the desired color of reflected light. In the case of obtaining a greenish reflected color tone, the thickness of the titanium nitride film is preferably in the range of from 30 to 60 nm. In this case, the thickness of the metal oxide film formed on the titanium nitride is preferably from 15 to 50 nm, from 10 to 30 nm, or from 10 to 40 nm when the metal oxide is silicon oxide, titanium oxide, or tin oxide, respectively.

In the case of obtaining a bluish reflected color tone, the thickness of the titanium nitride film is preferably from 15 to 35 nm. In this case, the thickness of the metal oxide film is from 5 to 25 nm, from 5 to 20 nm, or from 5 to 20 nm when the metal oxide is silicon oxide, titanium oxide, or tin oxide, respectively.

The reasons for these optimal thickness ranges for the films are as follows. If the titanium nitride film is too thin, sufficient solar heat shielding performance cannot be obtained. If it is too thick, the heat-reflecting glass disadvantageously gives a yellowish reflected color tone. If the metal oxide film is too thin, the effect of preventing the titanium nitride film from oxidation is insufficient. If it is too thick, the heat-reflecting glass disadvantageously gives a yellowish reflected color tone. The reason why the films made of different materials differ in optimal film thickness range is that these films slightly differ in optical properties, e.g., refractive index, according to the materials.

For forming the titanium nitride coating film according to the present invention, vapor deposition, sputtering or the like can be used. However, chemical vapor deposition (CVD), which is a pyrolytic method, is preferred from the standpoints of productivity and that the glass plate can be subjected to air blast cooling and tempering after the film formation.

For forming a film of a metal oxide, such as silicon oxide, titanium oxide or tin oxide, on the titanium nitride film, vapor deposition, sputtering, coating or the like can be used. However, chemical vapor deposition (CVD), which is a pyrolytic method, or a spraying method as another pyrolytic method, such as a solution, dispersion or powder spraying method, is preferred from the standpoints of productivity and coating film durability and that the glass plate can be subjected to air blast cooling and tempering after the film formation.

Film deposition by those methods may be conducted in the following manners. In forming a coating film by chemical vapor deposition, a film-forming vapor containing the compound to be deposited may be used. In the solution spraying method, film deposition is accomplished by spraying a solution of a compound of the metal to be deposited over the glass substrate heated at high temperature. In the case of the dispersion spraying or powder spraying method, film deposition is accomplished by spraying a dispersion of fine particles of a compound of the metal in a solution or solvent or by spraying a powder of a compound of the metal, in place of the above solution. In these spraying methods, a fluid prepared beforehand by mixing all ingredients together may be sprayed as minute droplets or particles. Alternatively, the ingredients may be separately and simultaneously sprayed as droplets or particles and reacted.

Among chemical methods, the spraying methods are disadvantageous in that evenness of film thickness is difficult to obtain because the control of sprayed droplets and the control of reaction products and products to be discharged, including undecomposed products, are difficult. Furthermore, use of the spraying methods results in considerable glass distortion. Therefore, CVD is preferred from a comprehensive standpoint.

A general technique for forming a film of a metal oxide by CVD comprises heating a cut glass and blowing a gaseous compound of the metal against the glass to deposit a metal oxide film thereon. However, if this filmdeposition technique is used in such a manner that a glass plate formed through melting, cooling, and then cutting is reheated before a gaseous metal compound is blown against thereto to form a film, this process is disadvantageous in that a step for the reheating is additionally required and a larger quantity of energy is necessary for heating. It is therefore desirable, as specified in the preferred embodiments, to form a film by CVD on a glass ribbon which is maintained at high temperature by utilizing the heat energy applied for glass forming (float molding). Furthermore, by conducting this CVD technique within the space over the tin float bath, the defects generally called pinholes can be diminished.

Film deposition may also be conducted in such a manner that a titanium nitride coating film or the like is formed by CVD and a coating film of a metal oxide, e.g., tin oxide or titanium oxide, is formed thereon by a spraying method.

Examples of materials usable in the above-described pyrolytic methods are shown below.

Examples of titanium materials for titanium nitride to be deposited by CVD include titanium tetrachloride, tetrakisdimethylamidotitanium, and tetrakisdiethylamidotitanium. Examples of materials for nitriding include ammonia, methylamine, ethylamine, dimethylamine, butylamine, and methylhydrofuran.

Examples of titanium materials for titanium oxide to be deposited by CVD include titanium isopropoxide besides the titanium materials enumerated above.

Examples of silicon materials for silicon oxide to be deposited by CVD include monosilane, disilane, trisilane, monochlorosilane, dichlorosilane, 1,2-dimethylsilane, 1,1,2-trimethyldisilane, 1,1,2,2-tetramethyldisilane, tetramethyl orthosilicate and tetraethyl orthosilicate. Examples of oxidizing agents include oxygen, water vapor, dry air, carbon dioxide, carbon monoxide, nitrogen dioxide and ozone. A gas of an unsaturated hydrocarbon such as, e.g., ethylene, acetylene, or toluene may be added for the purposes of preventing a silane used as a silicon material from oxidizing before it reaches the glass surface, and of regulating the refractive index of the silicon oxide film to be obtained.

Examples of tin materials for tin oxide to be deposited by CVD include tin tetrachloride, dimethyltin dichloride, dibutyltin dichloride, tetrabutyltin, dioctyltin dichloride, dimethyltin dichloride, tetramethyltin, tetraoctyltin and monobutyltin trichloride. Examples of materials for oxidation include oxygen, water vapor and dry air.

In the case of adding antimony as an additive, examples of materials therefor include antimony trichloride and antimony pentachloride. In the case of adding fluorine, examples of materials therefor include hydrogen fluoride, trifluoroacetic acid, bromotrifluoromethane and chlorodifluoromethane.

Examples of titanium materials in the case of film deposition by a spraying method include titanium tetrachloride, titanium tetraethoxide, acetylacetone titanyl, titanous sulfate, titanic sulfate, titanium tetrabutoxide, titanium isopropoxide, titanium methoxide, titanium diisopropoxybisoctylene glycoxide, titanium di-n-propoxybisoctylene glycoxide, titanium (diisopropoxymonooctylene glycoxy)acetylacetonate, titanium (di-n-butoxymonooctylene glycoxy)acetylacetonate, titanium tetraoctylene glycoxide and titanium di-n-propoxybisacetylacetonate.

Examples of silicon materials in the case of film deposition by a spraying method include tetramethyl orthosilicate and tetraethyl orthosilicate. For the purpose of accelerating the film formation, zirconium acetylacetonate or the like may be added.

Examples of tin materials in the case of film deposition by a spraying method include tin tetrachloride, dibutyltin dichloride, tetrabutyltin, dioctyltin dichloride, dimethyltin dichloride, tetraoctyltin, dibutyltin oxide, dibutyltin dilaurate, dibutyltin fatty acids, monobutyltin fatty acids, monobutyltin trichloride, dibutyltin diacetate, dioctyltin diacetate, and dioctyltin dilaurate.

In the present invention, a salt of a metal such as, e.g., manganese, vanadium, bismuth, cobalt, iron, chromium, nickel, copper, tin, antimony, titanium, zirconium, zinc, aluminum, silicon, or indium and a halogen element such as, e.g., chlorine or bromine may be incorporated into the coating films for the purpose of regulating the color tone and optical properties of the heat-reflecting glass to be obtained or regulating the durability of the coating films, so long as this incorporation does not defeat the objects of the invention.

Possible examples of the double-glazing unit include one in which the two glass plates are disposed apart at a distance of about from 5 to 6 mm to form therebetween an air layer or a layer of an inert gas, e.g., argon, and further include one in which the two glass plates are disposed apart at a distance of 1 mm or shorter to form therebetween a vacuum layer having a pressure of from 10⁻² to 10⁻⁴ Torr.

In the case of using the heat-reflecting glass of the present invention to fabricate a double-glazing unit having the constitution described above, this double-glazing unit is preferably fabricated in such a manner that at least the outer-side glass plate is the heat-reflecting glass and that the titanium nitride film and metal oxide film formed on one of the main surfaces of the glass substrate face the air layer, layer of an inert gas, e.g., argon, or vacuum layer.

According to this constitution, solar energy is absorbed by the heat-reflecting glass, disposed as the outer-side glass plate, which employs a glass substrate containing iron which has been regulated with respect to amount and valence. The absorbed solar energy is shielded by the titanium nitride film and metal oxide film formed on that side of the heat-reflecting glass which faces the air layer, layer of an inert gas, e.g., argon, or vacuum layer. Furthermore, the air layer, layer of an inert gas, e.g., argon, or vacuum layer formed between the heat-reflecting glass and the indoor-side glass plate reduces the transmittance of the solar energy. Thus, the inflow of solar energy into the room is inhibited. Specifically, a double-glazing unit having a solar heat gain coefficient, indicating solar heat shielding performance, of 0.35 or lower can be obtained.

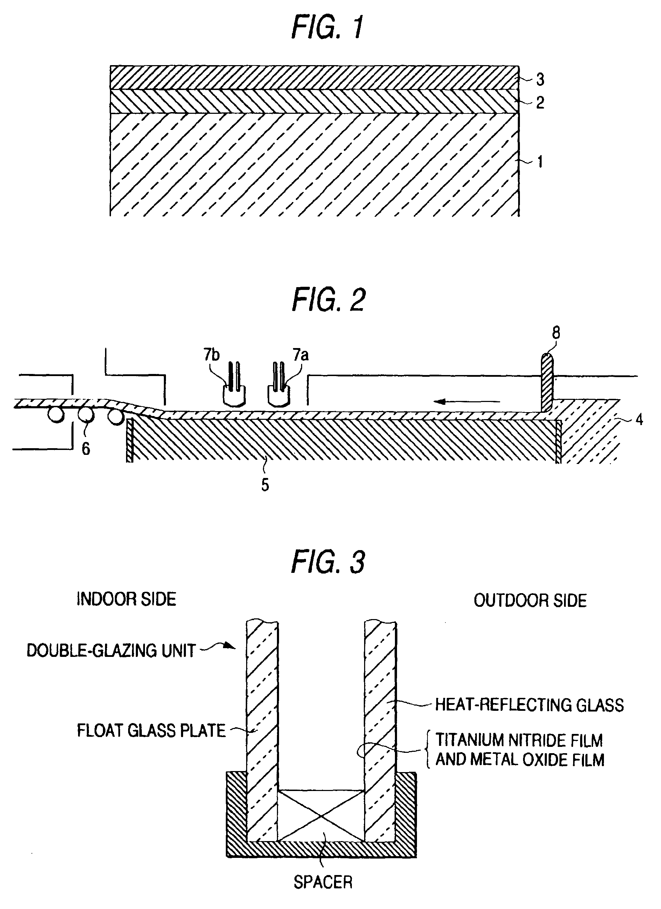

Embodiments of the present invention will be explained below by reference to the accompanying drawings, etc. Fig. 1 is an enlarged sectional view of a heat-reflecting glass according to the present invention. This heat-reflecting glass comprises a glass plate 1, a titanium nitride film 2 formed on one of the two main surfaces thereof, and a metal oxide film 3 formed on the film 2 and mainly comprising any one of silicon oxide, titanium oxide and tin oxide.

An example of methods for forming the titanium nitride film 2 and the metal oxide film 3, mainly comprising any one of silicon oxide, titanium oxide and tin oxide, is explained by reference to Fig. 2. In Fig. 2, numeral 4 denotes a melting furnace. A molten glass is caused to flow from the melting furnace 4 onto a tin bath 5 through a tweel 8 to form a float glass of a flat plate shape. This float glass is drawn out by the revolution of rollers 6. A glass ribbon is hence continuously produced from the molten glass.

This apparatus has coaters 7a and 7b disposed in a ceiling part over the tin bath 5. In a nitrogen gas atmosphere, the coater 7a blows a vapor of a titanium compound against the surface of the high-temperature glass ribbon which is being conveyed, whereby a titanium nitride film 2 is formed on the glass plate surface by a pyrolytic method utilizing the heat within the tin bath 5. A metal oxide film as the second layer is formed with the coater 7b in the same manner.

Besides being formed by the above method utilizing a float glass production process, the titanium nitride film and the metal oxide film can be formed by a method in which a glass placed on a mesh belt or the like is passed through a heating furnace and the two films are pyrolytically deposited on the glass during the passing. A combination of these two methods may also be used.

The present invention will be explained below in more detail by reference to the following Examples and Comparative Examples, but the invention should not be construed as being limited thereto.

### EXAMPLES 1 TO 4

Silica sand, dolomite, limestone, soda ash, potassium carbonate, boron oxide, salt cake, ferric oxide, titanium oxide, cobalt oxide (added in Examples 2 and 3 only) and a carbonaceous reducing agent were suitably mixed so as to obtain given glass compositions. The resulting batches each was melted by heating to 1,500°C in an electric furnace.

Each glass composition was regulated so as to contain approximately 72% SiO₂, 1.5% Al₂O₃, 4% MgO, 8% CaO, 13% Na₂O and 0.7% K₂O by weight as typical basic compositions, besides coloring components. Each molten batch was maintained for 4 hours, and the resulting molten glass was cast on a stainless steel plate and annealed to obtain a glass plate having a thickness of about 8 mm. The glass plates thus obtained were polished so as to have a thickness of 6 mm.

Each of these glass plates was washed, dried, and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the coated glass plate was placed on the mesh belt of an open type conveying furnace and passed through a heating furnace to heat it to about 430°C. On this heated glass plate was formed a titanium oxide coating film using a mixed gas composed of titanium isopropoxide gas, oxygen and nitrogen.

Metal contents and optical properties of each glass obtained are shown in Table 1. The values of these optical properties were obtained through examinations of the glass plates from the uncoated side.

### EXAMPLES 5 TO 8

Glass plates having a thickness of 6 mm were obtained in the same manner as in Example 1, except that in Example 7, a glass plate containing cobalt oxide was obtained by adding cobalt oxide to the batch materials.

Each of these glass plates was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the coated glass plate was placed on the mesh belt of an open type conveying furnace and passed through a heating furnace to heat it to about 530°C. On this heated glass plate was formed a tin oxide coating film using a mixed gas composed of monobutyltin trichloride gas, oxygen, water vapor and nitrogen.

Metal contents and optical properties of each glass obtained are shown in Table 1. The values of these optical properties were obtained through examinations of the glass plates from the uncoated side.

### EXAMPLES 9 TO 12

Glass plates having a thickness of 6 mm were obtained in the same manner as in Example 1.

Each of these glass plates was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the coated glass plate was placed on the mesh belt of an open type conveying furnace and passed through a heating furnace to heat it to about 500°C. On this heated glass plate was formed a silicon oxide coating film using a mixed gas composed of monosilane, oxygen and nitrogen.

Metal contents and optical properties of each glass obtained are shown in Table 1. The values of these optical properties were obtained through examinations of the glass plates from the uncoated side.

### EXAMPLES 13 AND 14

Glass plates having a thickness of 3.4 mm were obtained in the same manner as in Example 1.

Each of these glass plates was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the coated glass plate was placed on the mesh belt of an open type conveying furnace and passed through a heating furnace to heat it to about 430°C. On this heated glass plate was formed a titanium oxide coating film using a mixed gas composed of titanium isopropoxide gas, oxygen and nitrogen.

Metal contents and optical properties of each glass obtained are shown in Table 1. The values of these optical properties were obtained through examinations of the glass plates from the uncoated side.

### EXAMPLES 15 AND 16

Silica sand, dolomite, limestone, soda ash, potassium carbonate, boron oxide, salt cake, ferric oxide, cobalt oxide and a carbonaceous reducing agent were suitably mixed so as to obtain given glass compositions. The resulting batches each was melted by heating to 1,500°C in an electric furnace. Each glass composition was regulated so as to contain approximately 72% SiO₂, 1.5% Al₂O₃, 4% Mgo, 8% CaO, 13% Na₂O and 0.7% K₂O by weight as typical basic components, besides coloring components. Each molten batch was maintained for 4 hours, and the resulting molten glass was cast on a stainless steel plate and annealed to obtain a glass plate having a thickness of about 8 mm. The glass plates thus obtained were polished so as to have a thickness of 6 mm.

Each of these glass plates was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the furnace was evacuated again with a vacuum pump and the chamber was then filled with nitrogen. The glass plate was heated to about 500°C, and a silicon oxide coating film was formed thereon using a mixed gas composed of monosilane, oxygen and nitrogen.

Metal contents and optical properties of each glass obtained are shown in Table 1. The values of these optical properties were obtained through examinations of the glass plates from the uncoated side.

### COMPARATIVE EXAMPLES 1 AND 2

Silica sand, dolomite, limestone, soda ash, potassium carbonate, boron oxide, salt cake, ferric oxide, titanium oxide and a carbonaceous reducing agent were suitably mixed so as to obtain given glass compositions. The resulting batches each was melted by heating to 1,500°C in an electric furnace. Each glass composition was regulated so as to contain approximately 72% SiO₂, 1.5% Al₂O₃, 4% MgO, 8% CaO, 13% Na₂O and 0.7% K₂O by weight as typical basic compositions, besides coloring components. Each molten batch was maintain for 4 hours, and the resulting molten glass was cast on a stainless steel plate and annealed to obtain a glass plate having a thickness of about 8 mm. The glass plates thus obtained were polished so as to have a thickness of 6 mm.

Each of these glass plates was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the coated glass plate was placed on the mesh belt of an open type conveying furnace and passed through a heating furnace to heat it to about 430°C. On this heated glass plate was formed a titanium oxide coating film using a mixed gas composed of titanium isopropoxide gas, oxygen and nitrogen.

Metal contents and optical properties of each glass obtained are shown in Table 1. The values of these optical properties were obtained through examinations of the glass plates from the uncoated side.

### COMPARATIVE EXAMPLE 3

Silica sand, dolomite, limestone, soda ash, potassium carbonate, boron oxide, salt cake, ferric oxide and a carbonaceous reducing agent were suitably mixed so as to obtain a given glass composition. The resulting batch was melted by heating to 1,500°C in an electric furnace. The glass composition was regulated so as to contain approximately 72% SiO₂, 1.5% Al₂O₃, 4% MgO, 8% CaO, 13% Na₂O and 0.7% K₂O by weight as typical basic compositions, besides coloring components. The molten batch was maintained for 4 hours, and the resulting molten glass was cast on a stainless steel plate and annealed to obtain a glass plate having a thickness of about 8 mm. The glass plate thus obtained was polished so as to have a thickness of 6 mm.

This glass plate was washed, dried and then placed as a substrate in a closed type furnace. The furnace was evacuated with a vacuum pump and the chamber was then filled with nitrogen, during which operation the glass was heated to about 640°C. Thereafter, a gas composed of titanium tetrachloride, ammonia and nitrogen was used to form a titanium nitride coating film, and the coated glass plate was cooled gradually. Subsequently, the furnace was evacuated again with a vacuum pump and the chamber was then filled with nitrogen. The glass plate was heated to about 500°C, and a silicon oxide coating film was formed using a mixed gas composed of monosilane, oxygen and nitrogen.

Metal contents and optical properties of the glass obtained are shown in Table 1. The values of these optical properties were obtained through examinations of the glass plate from the uncoated side.

### EXAMPLE 17

A double-glazing unit was fabricated using the heat-reflecting glass obtained in Example 4 and a 6 mm-thick glass plate made of a colorless and transparent soda-lime glass. In fabricating the double-glazing unit, aluminum spacers packed with a drying agent were disposed between the two glass plates along the edges thereof, and these glass plates and spacers were bonded to each other with butyl rubber. In the double-glazing unit, the coated side of the heat-reflecting glass faced the air layer, which had a thickness of 6 mm.

The double-glazing unit obtained had a visible light reflectance of 17.0%, gave a greenish reflected color tone, and had a solar heat gain coefficient of 0.26. These properties were obtained through examinations of the glass from the uncoated side of the heat-reflecting glass.

### EXAMPLE 18

A double-glazing unit was fabricated in the same manner as in Example 17 using the heat-reflecting glass obtained in Example 15 and a 6 mm-thick glass plate made of a colorless and transparent soda-lime glass.

The double-glazing unit obtained had a visible light reflectance of 10.3%, gave a bluish reflected color tone, and had a solar heat gain coefficient of 0.32. These properties were obtained through examinations of the glass from the uncoated side of the heat-reflecting glass.

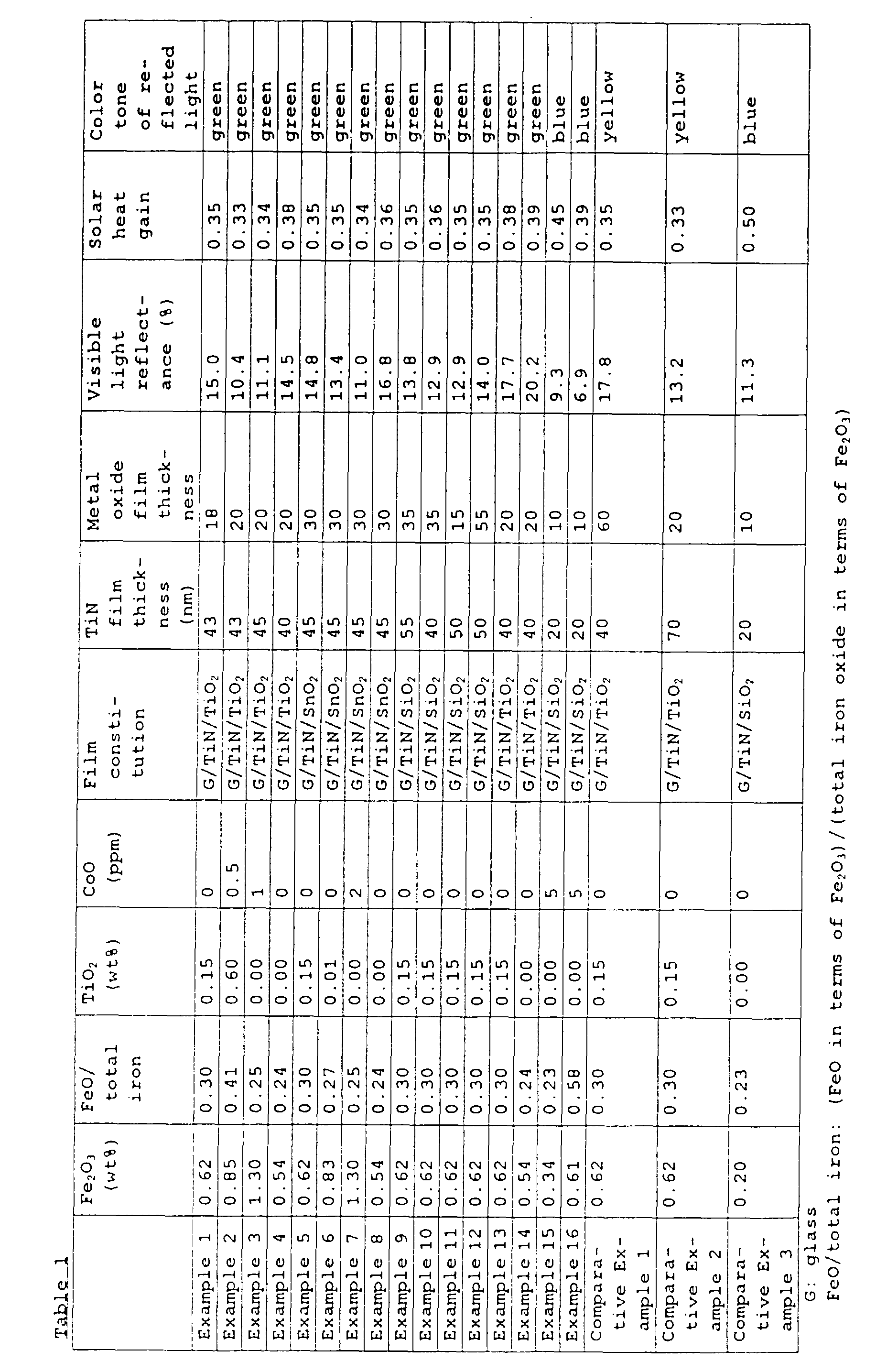

In Examples 1 to 18 and Comparative Examples 1 to 3, the visible light reflectance and solar heat gain coefficient of each glass plate were measured by the following methods.

Namely, the visible light reflectance and solar heat gain coefficient of each glass obtained were measured in accordance with JIS R 3106-1985.

As described above in detail, the present invention produces the following effects. A heat-reflecting glass having enhanced solar heat shielding performance is obtained by regulating a glass plate with respect to the amount and valence of iron to thereby attain a reduced solar energy transmittance while maintaining a high visible light transmittance, and by forming a coating film which further reduces the solar energy transmittance.

Furthermore, a heat-reflecting glass giving a greenish or bluish reflected color tone is obtained by regulating the glass plate with respect to the amount and valence of iron to thereby regulate the color tone of the transmitted light which has passed through the glass plate, and by regulating a metal oxide coating film with respect to its metallic material and further regulating a titanium nitride coating film and the metal oxide coating film with respect to film thickness.

Moreover, a heat-reflecting glass having a low reflectance with respect to light incident thereon from the outdoor side is obtained by using a coated glass plate in which both the glass plate and the coating films formed thereon show some degree of absorption in the visible region and by forming the coating films on the indoor side.

Furthermore, a coating film excellent in durability and productivity can be formed as a surface coating film of the heat-reflecting glass by depositing the film by CVD as a pyrolytic method.

In addition, a double-glazing unit having excellent solar heat shielding performance is obtained by using the heat-reflecting glass as at least one of the glass plates.

While the invention has been described in detail and with reference to specific embodiments thereof, it will be apparent to one skilled in the art that various changes and modifications can be made therein without departing from the spirit and scope thereof.

## Claims

1. A heat-reflecting glass which comprises a glass plate comprising a glass composition which consists essentially of, in % by weight,
basic glass composition comprising
65 to 80% SiO₂,
0 to 5% Al₂O₃,
0 to 5% B₂O₃,
0 to 10% MgO,
5 to 15% CaO,
10 to 18% Na₂O,
0 to 5% K₂O,
5 to 15% MgO+CaO and
10 to 20% Na₂O+K₂O, and
coloring components comprising
0.30 to 1.30% total iron oxide in terms of Fe₂O₃,
0 to 1.0% TiO₂, and
0 to 20 ppm CoO
wherein a ratio of (the amount of FeO in terms of Fe₂O₃) to (the amount of total iron oxide in terms of Fe₂O₃) is from 0.2 to 0.58, a titanium nitride film formed on one of two main surfaces of the glass plate, and a metal oxide film formed on the titanium nitride film,
said heat-reflecting glass having a visible light reflectance of from 4 to 25% when viewed from the uncoated side of the glass plate and giving a greenish or bluish reflected color tone when viewed from the uncoated side of the glass plate.

2. The heat-reflecting glass of claim 1, wherein the metal oxide film is an oxide film mainly comprising any one of silicon oxide, titanium oxide and tin oxide.

3. The heat-reflecting glass of claim 1, which has a solar heat gain coefficient of from 0.01 to 0.45 when disposed such that the uncoated side of the glass plate faces outward.

4. The heat-reflecting glass of claim 1, which has a visible light reflectance of from 4 to 20% when viewed from the uncoated side of the glass plate.

5. The heat-reflecting glass of claim 1, which has a solar heat gain coefficient of from 0.01 to 0.4 when disposed such that the uncoated side of the glass plate faces outward, and which gives a greenish reflected color tone when viewed from the uncoated side of the glass plate.

6. The heat-reflecting glass of claim 1, which has a visible light reflectance of from 4 to 15% when viewed from the uncoated side of the glass plate and gives a bluish reflected color tone when viewed from said side.

7. The heat-reflecting glass of claim 5, which has a solar heat gain coefficient of from 0.01 to 0.35 when disposed such that the uncoated side of the glass plate faces outward, and which gives a greenish reflected color tone when viewed from said side.

8. The heat-reflecting glass of claim 1, wherein the glass plate is a plate glass produced by a float process, and the titanium nitride film and the metal oxide film have been formed on the glass plate surface by a pyrolytic process utilizing the heat resulting from the float process.

9. A double-glazing unit which comprises two glass plates disposed so as to face each other and separated by an air layer, inert gas layer or vacuum layer formed by sealing the edges of the glass plates, at least one of the glass plates comprising the heat-reflecting glass of claim 1.

10. The double-glazing unit of claim 9, wherein the outdoor-side glass plate is the heat-reflecting glass, with the titanium nitride film and metal oxide film formed on a surface of the heat-reflecting glass facing the air, inert gas, or vacuum layer, and which has a solar heat gain coefficient of from 0.01 to 0.35 with respect to solar radiation incident thereon from the outdoor side.
